(19) Europäisches Patentamt
European Patent Office
Office européen des brevets

(11) **EP 3 227 542 B1**

(12) **EUROPEAN PATENT SPECIFICATION**

(45) Date of publication and mention
of the grant of the patent:
**06.11.2019  Bulletin 2019/45**

(51) Int Cl.:
*F02D 41/00* *(2006.01)*        *F02D 35/02* *(2006.01)*
*F02D 13/02* *(2006.01)*

(21) Application number: **14821225.1**

(86) International application number:
**PCT/FI2014/050933**

(22) Date of filing: **01.12.2014**

(87) International publication number:
**WO 2016/087700 (09.06.2016 Gazette 2016/23)**

(54) **A METHOD OF CONTROLLING AN OPERATION OF A VARIABLE INLET VALVE SYSTEM OF AN INTERNAL COMBUSTION PISTON ENGINE, AND AN INTERNAL COMBUSTION PISTON ENGINE**

VERFAHREN ZUR STEUERUNG DES BETRIEBS EINES VARIABLEN EINLASSVENTILSYSTEMS EINES KOLBENVERBRENNUNGSMOTORS UND EIN KOLBENVERBRENNUNGSMOTOR

PROCÉDÉ DE COMMANDE D'UN FONCTIONNEMENT D'UN SYSTÈME DE SOUPAPE D'ADMISSION VARIABLE D'UN MOTEUR À PISTONS À COMBUSTION INTERNE, ET MOTEUR À PISTONS À COMBUSTION INTERNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.10.2017   Bulletin 2017/41**

(73) Proprietor: **Wärtsilä Finland Oy**
**65100 Vaasa (FI)**

(72) Inventors:
• **ÖSTMAN, Fredrik**
**FI-65100 Vaasa (FI)**
• **KAAS, Tom**
**FI-65410 Sundom (FI)**

(74) Representative: **Genip Oy**
**Heikinkatu 7**
**48100 Kotka (FI)**

(56) References cited:
EP-A1- 1 477 651        EP-A2- 1 061 246
FR-A3- 2 892 459        JP-A- 2000 291 436
US-A1- 2002 011 233     US-A1- 2003 188 571
US-A1- 2007 151 545     US-A1- 2008 027 621
US-A1- 2010 089 364     US-B1- 6 386 179
US-B1- 6 530 361        US-B1- 6 843 231

## Description

## Technical field

The present invention relates to a method of controlling an operation of a variable inlet valve system of an internal combustion piston engine according to the preamble of claim 1.

The present invention relates also to an internal combustion piston engine.

## Background art

The operational requirements of combustion engines are becoming more and more demanding. Exhaust gas emission requirements of internal combustion piston engines become more and more stringent. In order to cope with such requirements there are various techniques available by means of which the gaseous emissions may be controlled when the engine is running. On the other hand, it is not desirable that the overall performance of the engine will suffer resulted from actions aiming to reduce the emissions. One means of achieving these goals is to adjust the timing of the inlet valves with greater accuracy because the timing of the inlet valves plays significant role in the engine performance.

It would be highly desirable that the operation and performance of each cylinders is in balance with each other. However, in practice there is almost always differences in cylinder operation such as different charge air pressures between cylinders. Even the smallest differences in delays or advances in the operation of the variable inlet valve systems of cylinders may cause major pressure differences between the cylinders. Then the engine does not operate at its optimal efficiency and the fuel in the cylinder does not burn completely.

US 20110171173 A1 discloses a system for and a method of balancing cylinders of an internal combustion piston engine. A maximum pressure and knock value and a mean maximum mean pressure of each cylinder is determined. The difference between the maximum pressure and the mean maximum pressure is determined. The differences are compared to a certain deviation range of the mean maximum pressure and the knock value to a certain knock limit value. The duration of the fuel injection of the cylinder is adjusted in case the difference of a single cylinder exceeds the lower limit of the deviation range and the knock value of the cylinder is less than the knock limit value or the difference of the cylinders exceeds the upper limit of deviation range.

US 2008196488 A1 discloses a method and device for determining with the aid of a cylinder pressure sensor the ratio between the fuel mass burned in a cylinder of an internal combustion engine and the fuel mass supplied to the cylinder.

WO 2008095569 A1 discloses a method of self-tuning cylinder pressure based heat release computation. The method comprises measuring a cylinder pressure as a function of crank angle and based on the measurement calculating a first polytropic exponent for a compression stroke and a second polytropic exponent for an expansion stroke. Then interpolation of the first and the second polytropic exponents and performing a net release computation based on the interpolated polytropic exponent. US 6 530361 B1 discloses a control of the compression pressure through the control of the inlet valve.

EP 2570637 A2 discloses a device for controlling an internal combustion engine comprising a variable valve mechanism for varying opening areas or the working angles of at least either the intake valves or the exhaust valves, wherein a pressure in the cylinder is calculated based on the opening area or the working angle at least either the intake valve or the exhaust valve varied by the variable valve mechanism.

An object of the invention is to provide a method for controlling an operation of a variable inlet valve system of an internal combustion piston engine in which the performance is improved compared to the prior art solutions.

## Disclosure of the Invention

Objects of the invention can be met substantially as is disclosed in the independent claims and in the other claims describing more details of different embodiments of the invention.

In a method of controlling an operation of an inlet valve system of each cylinder of an internal combustion piston engine the operation of each cylinder of the engine comprises at least

    a. Intake phase for admitting combustion air into the cylinder,

    b. Compression phase for compressing the combustion air in the cylinder by a movement of a piston in the cylinder towards its top dead center position,

    c. Power phase wherein the expanding gas resulted from fuel combustion forces the piston down the cylinder, and turning a crankshaft, and

    d. Exhaust phase for removal exhaust gas from the cylinder.

Further the method comprises steps:

    I. Measuring cylinder pressure ($p_0$) at each cylinder at least at a one predetermined crank angle position ($\theta_0$),

    II. Determining an estimated polytropic index ($\gamma$) for each cylinder corresponding to the at least one measured cylinder pressure at the predetermined crank angle position ($\theta_0$),

III. determining an estimated compression pressure ($p^{est}$) for at least at a second crank angle position by using the at least one measured cylinder pressure $p_0$ and the at least one estimated polytropic index ($\gamma$), and

IV. Controlling the operation of the inlet valve system in a response to the estimated compression pressure ($p^{est}$).

This provides a method of controlling an operation of an inlet valve system of an internal combustion piston engine in which performance is considerably improved. More specifically, the operation of the inlet valve system comprises advantageously adjusting the timing of the inlet valve closing. The timing means controlling the closing in respect to the crank angle, and thus also in respect to the position of the piston in the cylinder.

In each cylinder of the engine the intake phase, the compression phase, the power phase, and the exhaust phase are practised successively during each cycle. During the operation of the engine the phases are cyclically repeated, thus the operation comprises a first cycle of phases, the second cycle of phases etc. wherein the first cycle is referred to as a preceding cycle and the second cycle is referred to as succeeding cycle.

According to an embodiment of the invention, the steps of measuring cylinder pressure at each cylinder at least at a one predetermined crank angle position, determining an estimated polytropic index for each cylinder corresponding to the at least one measured cylinder pressure at the predetermined crank angle position, and determining an estimated compression pressure for at least at a second crank angle position by using the at least one measured cylinder pressure and the at least one estimated polytropic index, are executed during a preceding cycle, and the step of controlling the operation of the inlet valve system in response to the estimated compression pressure is executed during a succeeding cycle. In other words, according the embodiment the steps i.-iii. are executed at least one cycle ahead than executing the step iv.

According to an embodiment of the invention, the step of measuring cylinder pressure at least at a one predetermined crank angle position is executed during the compression phase.

According to an embodiment of the invention, the step of measuring cylinder pressure ($p_0$) at each cylinder at least at a one predetermined crank angle position ($\theta_0$) is executed during the compression phase during a preceding cycle and the step of controlling the operation of the inlet valve system in a response to the estimated compression pressure ($p^{est}$) is executed during a succeeding cycle. According to an embodiment of the invention, the steps ii.-iii. are executed during the compression phase before the piston reaches the top dead center position.

According to an embodiment of the invention, the steps i.-iii. are executed in a preceding cycle, and the step iv. is executed during a succeeding cycle.

According to an embodiment of the invention, the method comprises the step of using a predetermined value for the estimated polytropic index ($\gamma$). In this case real-time estimation for the polytropic index ($\gamma$) is not needed.

According to an embodiment of the invention, the steps i.-iv. are repeated during the engine is running.

According to an embodiment of the invention, the method comprises in step iv. to control the operation of the variable inlet valve system in each cylinder to obtaining a predetermined peak compression pressure in each cylinder. Particularly, the aim is to obtain a same peak compression pressure in all cylinders and thus balancing the operation of cylinders so as to improve the performance of the engine.

According to an embodiment of the invention, the estimated compression pressure is an estimated peak compression pressure and the operation of the variable inlet valve system is controlled by a response to the estimated peak compression pressure. Therefore, substantially the same peak compression pressure is obtained at each cylinder of the engine. This enhances the power output of the engine and improves the efficiency of the engine.

According to yet another embodiment of the invention, the method comprises the step of determining the estimated compression pressure $p^{est}$ in each cylinder at the second crank angle position as follows

$$p^{est} = p_0 \left( \frac{V_0}{V^{est}} \right)^{\gamma},$$

where cylinder pressure $p_0$ is measured at the one predetermined crank angle position $\theta_0$, $V_0$ is a cylinder volume at the one predetermined crank angle position $\theta_0$, $V^{est}$ is a cylinder volume at the second crank angle position and the estimated polytropic index is $\gamma$.

According to an embodiment of the invention, the method comprises the step of comparing the estimated compression pressures of each cylinder and computing a mean value of compression pressures and using the mean value as the response for controlling the operation of the inlet valve system in step iv. in order to obtain a same peak compression pressure in each cylinder.

According to an embodiment of the invention, the method comprises the step of controlling the operation of the inlet valve system by the response to the estimated compression pressure $p^{est}$ to obtain a predetermined target peak compression pressure. The predetermined target peak compression pressure may be decided in advance for each engine and engine load separately. It should be noted that the predetermined target peak compression pressure may be only a single number or it can be an adequate deviation range.

According to an embodiment of the invention, the method comprises the step of controlling the operation of the inlet valve system of each cylinder by the response to the estimated compression pressure $p^{\text{est}}$ of each cylinder to obtain a same peak compression pressure in each cylinder.

According to an embodiment of the invention, the method comprises the step of controlling the operation of the inlet valve system by the response to the estimated compression pressure $p^{\text{est}}$ that is the highest estimated compression pressure of the measured cylinder pressures so as to obtain a same peak compression pressure in each cylinder that is the highest estimated peak compression pressure.

According to an embodiment of the invention, the method comprises the step of determining the estimated compression pressure $p^{\text{est}}_{\text{TDC}}$ at the top dead center position in each cylinder at the second crank angle position, as follows

$$p^{\text{est}}_{\text{TDC}} = p_0 \left( \frac{V_0}{V^{\text{est}}_{\text{TDC}}} \right)^{\gamma},$$

where cylinder pressure $p_0$ is measured at the one predetermined crank angle position, $V_0$ is a cylinder volume at the one predetermined crank angle position $\theta_0$, $V^{\text{est}}_{\text{TDC}}$ is a cylinder volume at the second crank angle position at the top dead center position and estimated polytropic index is $\gamma$.

An internal combustion engine comprising

    a. At least one cylinder,

    b. A piston arranged to reciprocate inside the cylinder,

    c. At least one inlet valve system arranged in connection with the cylinder.

Further, the engine comprises a measuring unit arranged to measure pressure with pressure sensors in the cylinder during a compression stroke before the piston reaches a top dead center position at least at a one predetermined crank angle position, an estimation unit arranged to determine an estimated polytropic index corresponding to the measured cylinder pressure at the predetermined crank angle position and a determination unit to determine an estimated compression pressure at a second crank angle position by using the measured cylinder pressure and the estimated polytropic index, and the engine further comprises a control unit arranged to control the operation the inlet valve system in a response to the estimated compression pressure.

According to an embodiment of the invention, the engine comprises more than one cylinder.

According to an embodiment of the invention, the control unit comprises instructions to operate the inlet valve system so as to obtain a pre-determined target compression pressure for each cylinder by controlling the closing timing of the valve system.

**Brief Description of Drawings**

In the following, the invention will be described with reference to the accompanying exemplary, schematic drawings, in which

    Figure 1 illustrates a diagram of a method of controlling an operation of an inlet valve system to the first embodiment of the invention,
    Figure 2 illustrates a diagram of a method of controlling an operation of a inlet valve system according to another embodiment of the invention, and
    Figure 3 illustrates a graph of two pressure curves a measured pressure curve and an estimated pressure curve in one cylinder.

**Detailed Description of Drawings**

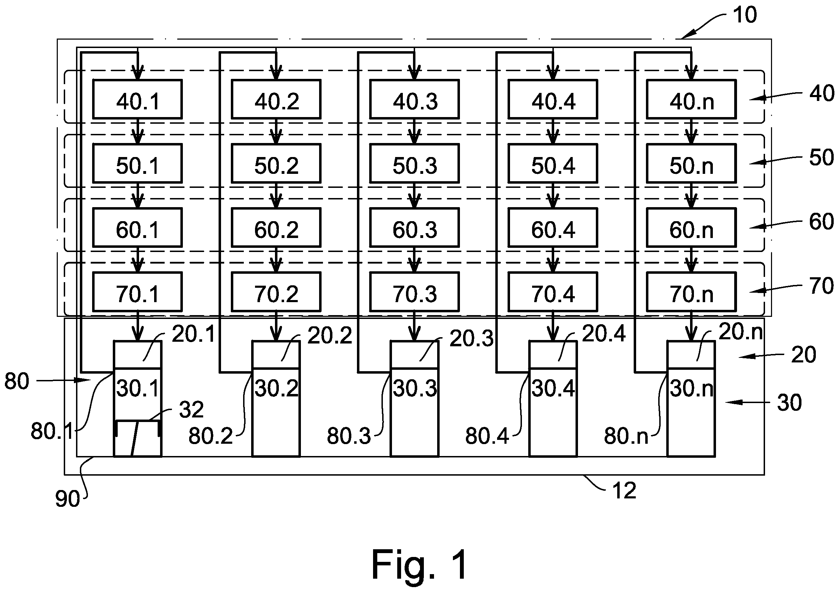

Figure 1 depicts schematically a control system 10 arranged to execute instruction to practise a method of controlling operation of an inlet valve system 20 of an internal combustion piston engine 12. The engine 12 comprises generally several cylinders 30 into each of which a piston 32 is arranged to reciprocate inside the cylinder 30 between the top dead center and the bottom dead center. In Figure 1 there is shown a first cylinder 30.1, a second cylinder 30.2, a third cylinder 30.3, a fourth cylinder 30.4 and an $n^{\text{th}}$ cylinder 30.n. Even though in the Figure 1 there is illustrated only one piston 32, every cylinder 30.1,...,30.n includes one piston.

Generally, the operation of one cylinder can be divided into four phases, whereas the engine may be a four stroke or two stroke engine: 1) intake phase, during which the combustion air is admitted to the cylinder, 2) compression phase wherein the piston moves towards its top dead center position and the pressure increases in the cylinder, 3) power phase wherein the expanding gas resulted from the fuel combustion forces the piston down the cylinder, and turning the crankshaft and the pressure in the cylinder decreases, and 4) exhaust phase for exhaust gas removal from the cylinder. The sequence of the phases from 1) to 4) is then repeated.

In order to have an effect on the maximum pressure in the cylinder, and thus on the engine performance, the variable inlet valve system 20 plays important role in the present invention. By controlling the inlet valve closing timings it is possible to control the pressure in the cylinder in advantageous manner.

In the embodiment of figure 1 the variable inlet valve system 20 comprises a first inlet valve system 20.1 that is arranged in connection with the first cylinder 30.1, a second inlet valve system 20.2 that is arranged in connection with the second cylinder 30.2, a third inlet valve system 20.3 that is arranged in connection with the third cylinder 30.3, a fourth inlet valve system 20.4 that is arranged in connection with the first cylinder 30.4 and an $n^{th}$ inlet valve system 20.n that is arranged in connection with the $n^{th}$ cylinder 30.n. Each of the inlet valve system is provided with operating system or mechanism by means of which the closing timing can be altered during the operation of the engine, and therefore the inlet valve system may be called here also as variable inlet valve system.

The control system 10 of the engine 12 comprises a measuring unit 40 arranged to measure pressure $p_0$ in each of the cylinders 30.1,..,30.n during a compression phase before the piston 32 reaches a top dead center position at least at a one predetermined crank angle position $\theta_0$, an estimation unit 50 arranged to determine an estimated polytropic index y corresponding to the measured cylinder pressure at the predetermined crank angle position $\theta_0$, and a determination unit 60 arranged to determine an estimated compression pressure $p^{est}$ at a second crank angle position by using the measured cylinder pressure $p_0$ and the estimated polytropic index y, and the engine 12 further comprises a control unit 70 arranged to control the operation of the variable inlet valve system 20 in a response to the estimated compression pressure $p^{est}$. Also the position of the crank angle is determined by a crank angle determination system 90, and the position is made available to the control system 10.

The control system is adapted to operate the engine so that during a compression phase before the piston reaches the top dead center position, cylinder pressure of each cylinder 30.1, 30.2, 30.3, 30.4,..., 30.n is measured by the measurement unit 40, individually 40.1, 40.2, 40.3, 40.4,..., 40.n at least at a one predetermined crank angle position $\theta_0$. Each cylinder 30.1, 30.2, 30.3, 30.4,..., 30.n is provided with pressure sensors 80.1, 80.2, 80.3, 80.4,...,80.n to measure the pressure in the cylinder. Then for each cylinder 30.1, 30.2, 30.3, 30.4,..., 30.n an estimated polytropic index y is determined by the estimation unit 50 with estimations 50.1, 50.2, 50.3, 50.4,..., 50.n for each cylinder based on the at least one measured cylinder pressure $p_0$ at the predetermined crank angle position $\theta_0$. The polytropic index $\gamma$ is a real number and it can be estimated by any suitable conventional method such as disclosed in publication WO2008095569 A1. So, the polytropic index $\gamma$ may be estimated e.g. in a following manner.

    i. Setting an initial value of the polytropic index,
    ii. Calculating a model pressure curve based on the initial value of the polytropic exponent,
    iii. Calculating a model mismatch for each crank angle,
    iv. Calculating a derivative with respect to the polytropic index of the sum of squared mismatches,
    v. Based on the outcome of the previous step, increasing or decreasing the polytropic exponent by a predetermined amount,
    vi. Reiterate steps ii to iv with the decreased or increased value of the polytropic index,
    vii. Calculate a second derivative with respect to polytropic index of the sum of squared mismatches,
    viii. Change value of the polytropic indexes by an amount corresponding to the derivative divided by the second derivative with a negative sign, and
    ix. Repeat steps ii, iii, iv, vii and viii until the amount corresponding to the absolute value of the derivative divided by the second derivative is smaller than a predetermined value.

Preferably, using the at least one measured cylinder pressure p0 and the at least one estimated polytropic index $\gamma$ the polytropic equation can be written as

$$p_0 V_0{}^{\gamma} = C,$$

where $C$ is a constant and $V_0$ is a volume of the cylinder at the crank angle position $\theta_0$.

It should be noted that if two measurements in one cylinder are taken during the compression stroke, let $p_0$ be a first pressure at a crank angle position $\theta_0$ and $p_1$ be a another pressure at another crank angle position $\theta_1$ in a one cylinder, then an approximation for the polytropic index $\gamma$ can be obtain from

$$\gamma = \frac{\ln\left(\frac{p_1}{p_0}\right)}{\ln\left(\frac{V_0}{V_1}\right)}$$

where 'ln' depicts natural logarithm. Estimation accuracy can be improved by increasing the number of measurements. In case of several measurements of the cylinder pressure are obtained, a determination of the corresponding polytropic index can be carried out, for example, with the least squares estimation.

It should also be noted that in real life the polytropic index $\gamma$ can also be a pre-determined value, and in that case real-time estimation for the polytropic index $\gamma$ is not needed. Thus, the estimated polytropic index is pre-determined, and such a pre-determined value for the polytropic index is used in the method.

However, using the at least one measured cylinder pressure $p_0$, and the at least one estimated polytropic index $\gamma$, an estimated compression pressure $p^{est}$ at a second crank angle position $\theta_x$ can be determined at determination units 60.1, 60.2, 60.3, 60.4,..., 60.n for each cylinder. Advantageously, the estimated compression pressure $p^{est}$ at the second crank angle position follows by the relation

$$p^{\text{est}} = p_0 \left( \frac{V_0}{V^{\text{est}}} \right)^{\gamma},$$

where $V^{\text{est}}$ is a volume of the cylinder at the second crank angle position $\theta_x$. In this case it is possible to interpolate the pressure curve in order to obtain an estimated peak compression pressure by using the measured pressure, the polytropic index and the estimated compression pressure $p^{\text{est}}$.

More advantageously according to an embodiment of the invention, the estimated compression pressure is an estimated peak compression pressure $p_{\text{TDC}}^{\text{est}}$ at the top dead center position that is

$$p_{\text{TDC}}^{\text{est}} = p_0 \left( \frac{V_0}{V_{\text{TDC}}^{\text{est}}} \right)^{\gamma},$$

where $V_{\text{TDC}}^{\text{est}}$ is a volume of the cylinder at the top dead center position. For each cylinder an estimate for the peak compression pressure at the top dead center position can be obtained which value may however vary between the cylinders. Therefore the operation of the variable inlet valve system is controlled so as to obtain substantially the equal peak compression pressure in each cylinder.

The operation of the variable inlet valve system 20.1, 20.2, 20.3, 20.4,..., 20.n is controlled by the control unit 70 comprising 70.1, 70.2, 70.3, 70.4,...,70.n for each cylinder 30.1, 30.2, 30.3, 30.4,...,30.n, respectively, based on the estimated compression pressure $p^{\text{est}}$ or $p_{\text{TDC}}^{\text{est}}$. The closing timing of the inlet valve system 20.1, 20.2, 20.3, 20.4,..., 20.n is controlled in such a way that the peak compression pressure is substantially the same for all cylinders. This balances the operation of each cylinder and the engine. In this connection the closing timing refers to the crank angle at which the inlet valve is closed.

According to an embodiment of the invention, the operation of the variable inlet valve system controlled individually on each cylinder to obtain a predetermined peak compression pressure. Therefore, each of the cylinders operates substantially at a same pressure level. Specifically, by means of the present invention the charge air pressures are substantially the same at each cylinders. In other words, the cylinder pressure measurement is used to estimate the peak compression pressure and then the closing timing of the inlet valve system is controlled to get the same peak compression pressure for all cylinders. Thus the pressure differences in cylinders are minimized.

Another way to balance pressures in each cylinder 30.1, 30.2, 30.3, 30.4,...,30.n is to use one measured cylinder pressure as a reference. Then the measured pressure of first cylinder 20.1 is used to estimate the peak compression pressure that is used as a reference value for the rest of the cylinders 30.2, 30.3, 30.4,...,30.n. Thus the operation of the rest of the inlet valve systems 70.2, 70.3, 70.4,...,70.n are controlled in such a way that in each cylinder the peak compression pressure will be substantially the same as the estimated peak compression pressure at the first cylinder 30.1.

Figure 1 illustrates schematically that the measurement unit 40, the estimation units 50 and 60 and the control unit 70 are individual units. However, it should be understood that the measurement unit 40, the estimation units 50 and 60 and the control unit 70 may be arranged into a one physical unit that can be called e.g. as an adjustment unit that comprises instructions to measure, estimate and control in a previously described manner.

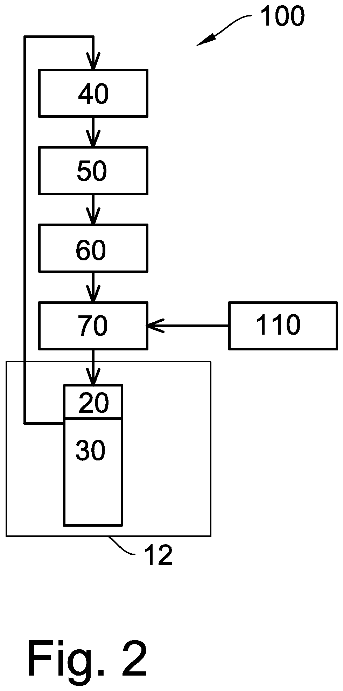

Figure 2 shows schematically a diagram 100 of a method wherein the inlet valve system is controlled in a closed loop manner. Similarly, as in Figure 1, the pressures in the cylinders 30 are measured 40, the polytropic indexes are determined 50, and estimated peak compression pressures in each cylinders are determined 60 during the compression phase. However, the control unit 70 is provided with a predetermined target peak compression pressure set point 110 and the operation in each cylinder is controlled with the control unit 70, such as a PID- control unit, by controlling the position of the variable inlet valve system 20 so that in each cylinder the peak compression pressure is substantially the same as the predetermined target peak compression pressure. Or in case the predetermined target peak pressure is given as a deviation range, the operation of the variable inlet valve system is controlled in such a way that each cylinder obtain the peak compression pressure within the predetermined deviation range. The operation of the each inlet valve system 20.1,..., 20.n can be controlled independently so that each cylinder will obtain the predetermined target peak compression pressure. This stabilizes the pressure levels in the cylinders and give more power out from the engine. Therefore, the engine may operate at an optimal efficiency and the fuel is burned in the cylinders more efficiently.

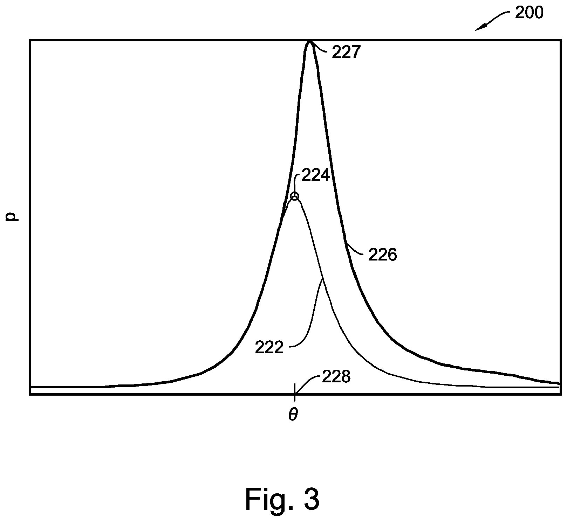

Figure 3 illustrates the operation of the present invention. It shows schematically a graph 200 with two curves for one cylinder: a one curve is an estimated compression pressure curve 222 and a second curve is a measured cylinder pressure curve 226. An estimated peak compression pressure 224 is shown in the estimated compression pressure curve 222. On the horizontal axis is the crank angle position $\theta$ and on the vertical axis is the pressure $p$ in the cylinder. Vertical line 228 on the horizontal axis depicts a zero angle i.e. the TDC-position. In this embodiment specifically, the peak compression pressure is estimated in a manner described earlier. As can be seen that the peak compression pressure 224 of the estimated compression pressure curve 222 is lower than a peak compression value 227 of the measured cylinder pressure curve 226 meaning that the variable inlet valve system of the cylinder is needed to control so as to obtain a higher pressure than the estimated peak compression pressure 224. Therefore, by controlling the operation, that is the closing timing of the variable inlet valve system to close or being open can have a positive impact to the pressure behaviour in the cylinder. In other words, the cylinder pressure measurement is used to estimate the peak compression pressure and then the position of the variable inlet valve system is controlled so as to obtain more desirable peak compression pressure in the cylinder. It can be possible, cf. Fig. 2, that the operation of the variable inlet valve system is controlled so that the predetermined target peak compression pressure is obtained. As can be seen from the schematic drawing in Figure 3, there is a big difference in peak compression pressures 224 and 227 of these two curves 222 and 226. The peak compression pressure 224 in the estimated compression pressure curve 222 is located at the zero crank angle position while in the measured compression curve 226, the peak compression pressure 227 is shifted on the positive crank angle position side i.e. after the TDC (to the right in Figure 3). Even though, Figure 3, shows curves for one cylinder, it should be noted that corresponding curves are possible to be generated for each of the cylinders. Using the estimated peak compression pressure estimates in each cylinder to control the operation of the variable inlet valve system, more balanced operations and combustions are obtained in the engine.

Preferable, the variable inlet valve system is a variable inlet valve closing system (VIC) wherein the inlet valve closing timing can be adjusted and the inlet valve can be open longer compared to standard systems. The variation of the inlet valve closing timing may be achieved hydraulically through the addition of a hydraulic chamber between the inlet valve tappet and the push rod. Only the necessary parts concerning the invention are described, the variable inlet valve system may comprise other parts such as pressure accumulator, piston and oil supply and non-return valve.

It should be noted that if the measured compression pressure in the cylinder and the estimated compression pressure or the estimated peak compression pressure are substantially the same as the targeted pressure, then there is substantially no need to change the operation of the variable inlet valve system.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

**Claims**

1. A method of controlling operation of an inlet valve system (20.1, 20.2,...20.n) of each cylinder of an internal combustion piston engine (12), in which an operation of each cylinder (30) of the engine (12) comprises at least

   a. Intake phase for admitting combustion air into the cylinder (30),
   b. Compression phase for compressing the combustion air in the cylinder by a movement of a piston in the cylinder towards its top dead center position,
   c. Power phase wherein expanding gas resulted from fuel combustion forces the piston down the cylinder, and turning a crankshaft, and
   d. Exhaust phase for removal the exhaust gas from the cylinder (30),

   wherein the method comprising following steps:

   I. Measuring cylinder pressure ($p_0$) in each cylinder (30.1, 30.2,...,30.n) at least at a one predetermined crank angle position ($\theta_0$),
   II. Determining an estimated polytropic index ($\gamma$) for each cylinder (30.1, 30.2,...,30.n) corresponding to the at least one measured cylinder pressure ($p_0$) at the predetermined crank angle position ($\theta_0$),
   III. determining an estimated compression pressure ($p^{est}$) for at least at a second crank angle position ($\theta_x$) by using the at least one measured cylinder pressure ($p_0$) and the at least one stimated polytropic index ($\gamma$),

   **characterized in that** the steps I to III are executed during a first cycle of the cylinder, and that a step of
   IV. Controlling the closing timing of a variable inlet valve (20.1, 20.2,...20.n) system of each cylinder in a response to the estimated compression pressure ($p^{est}$) of each cylinder to obtain a same pre-determined target peak compression pressure in each cylinder
   is executed during a second cycle of the cylinder.

2. The method according to claim 1, **characterized by** the step iii. wherein the estimated compression pressure ($p^{est}$) is an estimated peak compression pressure and in the step iv. the operation of the variable inlet valve system (20) is controlled by a response to the estimated peak compression pressure.

3. The method according to claim 1, **characterized by** determining the estimated compression pressure ($p^{est}$) in each cylinder at the second crank angle position as follows

$$p^{\text{est}} = p_0 \left(\frac{V_0}{V^{\text{est}}}\right)^{\gamma},$$

where cylinder pressure ($p_0$) is measured at the one predetermined crank angle position, ($V_0$) is a cylinder volume at the one predetermined crank angle position ($\theta_0$), ($V^{\text{est}}$) is a cylinder volume at the second crank angle position and the estimated polytropic index is ($\gamma$).

4. The method according to claim 2, **characterized by** comparing the estimated compression pressures ($p^{\text{est}}$) of each cylinder and computing a mean value of compression pressures and using the mean value as the response for controlling the operation of the inlet valve system in step iv so obtaining a same peak compression pressure in each cylinder.

5. The method according to claims 1, **characterized by** controlling the operation of the inlet valve system by the response to the estimated compression pressure ($p^{\text{est}}$) that is the highest estimated compression pressure of the measured cylinder pressures so as to obtain a same peak compression pressure in each cylinder that is the highest estimated peak compression pressure.

6. The method according to claim 1, **characterized by** determining the estimated compression pressure $\left(p_{\text{TDC}}^{\text{est}}\right)$ at the top dead center position in each cylinder at the second crank angle position, as follows

$$p_{\text{TDC}}^{\text{est}} = p_0 \left(\frac{V_0}{V_{\text{TDC}}^{\text{est}}}\right)^{\gamma},$$

where cylinder pressure ($p_0$) is measured at the one predetermined crank angle position, ($V_0$) is a cylinder volume at the one predetermined crank angle position ($\theta_0$), $\left(V_{\text{TDC}}^{\text{est}}\right)$ is a cylinder volume at the second crank angle position at the top dead center position and estimated polytropic index is ($\gamma$).

7. A method according to claim 1, **characterized in that** the step of measuring cylinder pressure at least at a one predetermined crank angle position is executed during the compression phase.

8. A method according to claim 1, **characterized by** using a predetermined value for the polytropic index $\gamma$.

9. An internal combustion piston engine (12) comprising

a. At least one cylinder (30),
b. A piston (32) arranged to reciprocate inside the cylinder (30),
c. At least one inlet valve system (20) arranged in connection with the cylinder (30),

**characterized in that** the engine (12) comprises a measuring unit (40) arranged to measure pressure ($p_0$) with pressure sensors (80) in the cylinder during a compression phase before the piston (32) reaches a top dead center position at least at a one predetermined crank angle position ($\theta_0$), an estimation unit (50) arranged to determine an estimated polytropic index ($\gamma$) corresponding to the measured cylinder pressure ($p_0$) at the pre-determined crank angle position ($\theta_0$) and a determination unit (60) to determine an estimated compression pressure ($p^{\text{est}}$) at a second crank angle position ($\theta_x$) by using the measured cylinder pressure ($p_0$) and the estimated polytropic index ($\gamma$), and the engine (12) further comprises a control unit (70) arranged to control the operation the variable inlet valve system (20) according to anyone of the preceding claims 1 - 8.

**Patentansprüche**

1. Verfahren zum Steuern eines Betriebs eines Einlassventilsystems (20.1, 20.2, ... 20.n) jedes Zylinders eines Verbrennungskolbenmotors (12), in welchem ein Betrieb jedes Zylinders (30) des Motors (12) mindestens Folgendes umfasst

a. Einlassphase zum Einlassen von Verbrennungsluft in den Zylinder (30),
b. Verdichtungsphase zum Verdichten der Verbrennungsluft in dem Zylinder durch eine Bewegung eines Kolbens in dem Zylinder in Richtung auf seine obere Totpunktposition,
c. Arbeitsphase, wobei sich ausdehnendes Gas, welches aus einer Brennstoffverbrennung resultierte, den Kolben in den Zylinder niederdrückt und eine Kurbelwelle dreht, und
d. Austrittsphase zur Entfernung des Abgases aus dem Zylinder (30),

wobei das Verfahren folgende Schritte umfasst:

I. Messen eines Zylinderdrucks ($p_0$) in jedem Zylinder (30.1, 30.2, ..., 30.n) an mindestens einer vorgegebenen Kurbeldrehwinkelposition ($\theta_0$),
II. Bestimmen eines geschätzten polytropischen Indexes ($\gamma$) für jeden Zylinder (30.1, 30.2, ..., 30.n) entsprechend dem mindestens einen gemessenen Zylinderdruck ($p_0$) an der vorgegebenen Kurbeldrehwinkelposition ($\theta_0$),
III. Bestimmen eines geschätzten Verdichtungsdrucks ($p^{\text{est}}$) für mindestens eine zweite Kurbel-

drehwinkelposition ($\theta_X$) unter Verwendung des mindestens einen gemessenen Zylinderdrucks ($p_0$) und des mindestens einen geschätzten polytropischen Indexes ($\gamma$),

**dadurch gekennzeichnet, dass** die Schritte I bis III während eines ersten Zyklus des Zylinders ausgeführt werden und dass ein Schritt des

IV. Steuerns des Schließzeitpunkts eines variablen Einlassventilsystems (20.1, 20.2, ... 20.n) jedes Zylinders in einer Reaktion auf den geschätzten Verdichtungsdruck ($p^{est}$) jedes Zylinders, um einen gleichen vorgegebenen Ziel-Spitzenverdichtungsdruck in jedem Zylinder zu erhalten,

während eines zweiten Zyklus des Zylinders ausgeführt wird.

2. Verfahren nach Anspruch 1, **gekennzeichnet durch** den Schritt iii, wobei der geschätzte Verdichtungsdruck ($p^{est}$) ein geschätzter Spitzenverdichtungsdruck ist und in dem Schritt iv der Betrieb des variablen Einlassventilsystems (20) durch eine Reaktion auf den geschätzten Spitzenverdichtungsdruck gesteuert wird.

3. Verfahren nach Anspruch 1, **gekennzeichnet durch** Bestimmen des geschätzten Verdichtungsdrucks ($p^{est}$) in jedem Zylinder bei der zweiten Kurbeldrehwinkelposition wie folgt

$$p^{est} = p_0 \left( \frac{V_0}{V^{est}} \right)^{\gamma},$$

wobei ein Zylinderdruck ($p_0$) an der einen vorgegebenen Kurbeldrehwinkelposition gemessen wird, ($V_0$) ein Zylindervolumen an der einen vorgegebenen Kurbeldrehwinkelposition ($\theta_0$) ist, ($V^{est}$) ein Zylindervolumen an der zweiten Kurbeldrehwinkelposition ist und der geschätzte polytropische Index ($\gamma$) ist.

4. Verfahren nach Anspruch 2, **gekennzeichnet durch** Vergleichen der geschätzten Verdichtungsdrücke ($p^{est}$) jedes Zylinders und durch Berechnen eines Durchschnittswerts von Verdichtungsdrücken und durch Verwenden des Durchschnittswerts als die Reaktion zum Steuern des Betriebs des Einlassventilsystems bei Schritt iv und so Ermitteln eines gleichen Spitzenverdichtungsdrucks in jedem Zylinder.

5. Verfahren nach Anspruch 1, **gekennzeichnet durch** Steuern des Betriebs des Einlassventilsystems durch die Reaktion auf den geschätzten Verdichtungsdruck ($p^{est}$), welcher der höchste geschätzte Verdichtungsdruck der gemessenen Zylinderdrücke ist, um so einen gleichen Spitzenverdichtungsdruck in jedem Zylinder zu erhalten, welcher der höchste geschätzte Spitzenverdichtungsdruck ist.

6. Verfahren nach Anspruch 1, **gekennzeichnet durch** Bestimmen des geschätzten Verdichtungsdrucks ($p_{TDC}^{est}$) an der oberen Totpunktposition in jedem Zylinder bei der zweiten Kurbeldrehwinkelposition wie folgt

$$p_{TDC}^{est} = p_0 \left( \frac{V_0}{p_{TDC}^{est}} \right)^{\gamma},$$

wobei ein Zylinderdruck ($P_0$) an der einen vorgegebenen Kurbeldrehwinkelposition gemessen wird, ($V_0$) ein Zylindervolumen an der einen vorgegebenen Kurbeldrehwinkelposition ($\theta_0$) ist, ($V_{TDC}^{est}$) ein Zylindervolumen an der zweiten Kurbeldrehwinkelposition an der oberen Totpunktposition ist und der geschätzte polytropische Index ($\gamma$) ist.

7. Verfahren nach Anspruch 1, **dadurch gekennzeichnet, dass** der Schritt des Messens eines Zylinderdrucks an mindestens einer vorgegebenen Kurbeldrehwinkelposition während der Verdichtungsphase ausgeführt wird.

8. Verfahren nach Anspruch 1, **gekennzeichnet durch** Verwenden eines vorbestimmten Werts für den polytropischen Index $\gamma$.

9. Verbrennungskolbenmotor (12), Folgendes umfassend

a. mindestens einen Zylinder (30),
b. einen Kolben (32), welcher eingerichtet ist, sich innerhalb des Zylinders (30) hin und her zu bewegen,
c. mindestens ein Einlassventilsystem (20), welches im Zusammenhang mit dem Zylinder (30) eingerichtet ist,

**dadurch gekennzeichnet, dass** der Motor (12) eine Messeinheit (40), welche eingerichtet ist, einen Druck ($p_0$) mit Drucksensoren (80) in dem Zylinder während einer Verdichtungsphase zu messen, bevor der Kolben (32) eine obere Totpunktposition an mindestens einer vorgegebenen Kurbeldrehwinkelposition ($\theta_0$) erreicht, eine Abschätzungseinheit (50), welche eingerichtet ist, einen geschätzten polytropischen Index ($\gamma$) entsprechend dem gemessenen Zylinderdruck ($p_0$) an der vorgegebenen Kurbeldrehwinkelposition ($\theta_0$) zu bestimmen, und eine Bestimmungseinheit (60) umfasst, um einen geschätzten Verdichtungsdruck ($p^{est}$) an einer zweiten Kurbeldrehwinkelposition ($\theta_X$) unter Verwendung des gemessenen Zylinderdrucks ($p_0$) und des geschätzten polytropischen Indexes ($\gamma$) zu bestimmen, und der Motor (12) weiterhin eine Steuerungseinheit (70) umfasst, welche eingerichtet ist, den Betrieb des variablen Einlassventilsystems (20) nach einem der vorhergehenden Ansprüche 1 bis 8 zu steuern.

**Revendications**

1. Procédé de commande du fonctionnement d'un système de soupapes d'admission (20.1, 20.2, ... 20.n) de chaque cylindre d'un moteur à piston à combustion interne (12) dans lequel un fonctionnement de chaque cylindre (30) du moteur (12) comprend au moins

> a. une phase d'admission pour admettre de l'air de combustion dans le cylindre (30),
> b. une phase de compression pour comprimer l'air de combustion dans le cylindre par un mouvement d'un piston dans le cylindre vers sa position de point mort haut,
> c. une phase de puissance dans laquelle le gaz en expansion résultant de la combustion du carburant pousse le piston vers le bas du cylindre et fait tourner un vilebrequin, et
> d. une phase d'échappement pour le retrait du gaz d'élimination du cylindre (30),

ce procédé comprenant les étapes suivantes :

> I. mesure de la pression du cylindre ($p_0$) dans chaque cylindre (30.1, 30.2, ... 30.n) au moins à une position prédéterminée de la manivelle ($\theta_0$),
> II. détermination d'un indice polytropique estimé ($\gamma$) pour chaque cylindre (30.1, 30.2, ... 30.n) correspondant à l'au moins une pression de cylindre mesurée ($p_0$) à la position angulaire prédéterminée de manivelle ($\theta_0$),
> détermination d'une pression de compression estimée ($p^{est}$) pour au moins une seconde position angulaire de manivelle ($\theta_x$) en utilisant l'au moins une pression de cylindre mesurée ($p_0$) et l'au moins un indice polytropique estimé ($\gamma$),
>
> **caractérisé en ce que** les étapes I à III sont exécutées pendant un premier cycle du cylindre, et qu'une étape de
> IV. commande de la temporisation de fermeture d'un système de soupape d'admission variable (20.1, 20.2, ... 20.n) de chaque cylindre en réaction à la pression de compression estimée ($p^{est}$) de chaque cylindre pour obtenir une même crête de pression de compression cible prédéterminée dans chaque cylindre est exécutée pendant un second cycle du cylindre.

2. Procédé selon la revendication 1, **caractérisé par** l'étape III, dans lequel la pression de compression estimée ($p^{est}$) est une crête de pression de compression cible estimée et en ce que, dans l'étape IV, le fonctionnement du système de soupape d'admission variable (20) est commandé par une réaction à la crête de pression de compression estimée.

3. Procédé selon la revendication 1, **caractérisé par** la détermination de la pression de compression estimée ($p^{est}$) dans chaque cylindre à la seconde position angulaire de manivelle comme suit

$$p^{est} = p_0 \left( \frac{V_0}{V^{est}} \right)^{\gamma},$$

dans laquelle la pression du cylindre ($p_0$) est mesurée à la position angulaire prédéterminée de manivelle, ($V_0$) est un volume de cylindre à la position angulaire prédéterminée de manivelle ($\theta_0$), ($V^{est}$) est un volume de cylindre à la seconde position angulaire de manivelle et l'indice polytropique estimé est ($\gamma$).

4. Procédé selon la revendication 2, **caractérisé par** la comparaison des pressions de compression estimées ($p^{est}$) de chaque cylindre et le calcul d'une valeur moyenne de pression de compression et l'utilisation de la valeur moyenne en tant que réaction pour commander le fonctionnement du système de soupape d'admission dans l'étape IV, en obtenant ainsi une même crête de pression de compression dans chaque cylindre.

5. Procédé selon la revendication 1, **caractérisé par** la commande du fonctionnement du système de soupape d'admission par la réaction à la pression de compression estimée ($p^{est}$) qui est la pression de compression estimée la plus élevée parmi les pressions mesurées du cylindre de manière à obtenir une même crête de pression de compression dans chaque cylindre qui est la crête de pression de compression estimée la plus élevée.

6. Procédé selon la revendication 1, **caractérisé par** la détermination de la pression de compression estimée $p^{est}_{TDC}$ à la position de point mort haut dans chaque cylindre à la seconde position angulaire de manivelle comme suit

$$p_{TDC}^{est} = p_0 \left( \frac{V_0}{p_{TDC}^{est}} \right)^{\gamma},$$

dans laquelle la pression du cylindre ($p_0$) est mesurée à la position angulaire prédéterminée de manivelle, ($V_0$) est un volume de cylindre à la position angulaire prédéterminée de manivelle ($\theta_0$), $V_{TDC}^{est}$ est un volume de cylindre à la seconde position angulaire de manivelle à la position de point mort haut et l'indice polytropique estimé est ($\gamma$).

7. Procédé selon la revendication 1, **caractérisé en ce que** l'étape de mesure de la pression du cylindre à au moins une position angulaire prédéterminée de manivelle est exécutée pendant la phase de compression.

8. Procédé selon la revendication 1, **caractérisé par** l'utilisation d'une valeur prédéterminée pour l'indice polytropique $\gamma$.

9. Moteur à combustion interne (12) comprenant

   a. au moins un cylindre (30),
   b. un piston (32) conçu pour aller et venir à l'intérieur du cylindre (30),
   c. au moins un système de soupape d'admission (20) disposé en connexion avec le cylindre (30),

   **caractérisé en ce que** le moteur (12) comprend une unité de mesure (40) conçue pour mesurer la pression ($p_0$) avec le capteur de pression (80) dans le cylindre pendant une phase de compression avant que le piston (32) atteigne une position de point mort haut à au moins une position angulaire prédéterminée de la manivelle ($\theta_0$), une unité d'estimation (50) conçue pour déterminer un indice polytropique estimé ($\gamma$) correspondant à la pression mesurée du cylindre ($p_0$) à la position angulaire prédéterminée de la manivelle ($\theta_0$) et une unité de détermination (60) pour déterminer une pression de compression estimée ($p^{est}$) à une seconde position angulaire de la manivelle ($\theta_x$) en utilisant la pression de cylindre mesurée ($p_0$) et l'indice polytropique estimé ($\gamma$), et le moteur (12) comprend en outre une unité de commande (70) conçue pour commander le fonctionnement du système de soupape d'admission variable (20) selon l'une quelconque des revendications précédentes 1 à 8.

Fig. 1

EP 3 227 542 B1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110171173 A1
- US 2008196488 A1
- WO 2008095569 A1
- US 6530361 B1
- EP 2570637 A2